# EUROPEAN PATENT SPECIFICATION

(11) **EP 4 017 772 B1**
(45) Date of publication and mention of the grant of the patent: **07.01.2026**
(21) Application number: 20854761.2
(22) Date of filing: 18.08.2020
(51) Int. Cl.: B60W 30/08, B60W 40/02, B60W 30/10, B60R 21/0134, B60W 50/00, B60W 30/095, B60W 60/00

(54) **SYSTEMS AND METHODS FOR TRAJECTORY BASED SAFEKEEPING OF VEHICLES**
SYSTEME UND VERFAHREN ZUR TRAJEKTORIEBASIERTEN SICHERUNG VON FAHRZEUGEN
SYSTÈMES ET PROCÉDÉS POUR ASSURER LA SÉCURITÉ DE VÉHICULES SUR LA BASE DE LA TRAJECTOIRE

(30) Priority: 22.08.2019 US 201916547712; 22.08.2019 US 201916547718
(43) Date of publication of application: 29.06.2022
(73) Proprietor: Volkswagen Group of America Investments, LLC, Reston, VA 20190 (US)
(72) Inventor: COSTA, Albert, Pittsburgh, PA 15222 (US); OLLIS, Mark, Pittsburgh, PA 15222 (GB); PETROFF, Thomas, Pittsburgh, PA 15222 (US); BROWNING, Brett, Pittsburgh, PA 15222 (US)
(74) Representative: Hofstetter, Schurack & Partner
(86) International application number: PCT/US2020/046756
(87) International publication number: WO 2021/034802

(56) References cited:
- DE-A1- 102013 001 228
- DE-A1- 102013 001 229
- JP-A- 2010 228 740
- US-A1- 2008 084 283
- US-A1- 2013 253 816
- US-A1- 2017 039 855
- US-A1- 2017 120 902
- US-A1- 2018 005 050
- US-A1- 2019 243 371
- US-B1- 9 248 834

## Description

### BACKGROUND

### Statement of the Technical Field

The present invention relates generally to on-board computers of vehicles. More particularly, the present invention relates to implementing systems and methods for trajectory based safekeeping of vehicles.

### Description of the Related Art

Modem day vehicles have at least one on-board computer and have internet/satellite connectivity. The software running on these on-board computers monitor and/or control operations of the vehicles.

US 9 248 834 B1 describes predicting trajectories of objects based on contextual information. An object is identified in a vehicle's environment, the object having a heading and location. A set of possible actions for the object is generated using map information describing the vehicle's environment and the heading and location of the object. A set of possible future trajectories of the object is generated based on the set of possible actions. A likelihood value of each trajectory of the set of possible future trajectories is determined based on contextual information including a status of the detected object. A final future trajectory is determined based on the determined likelihood value for each trajectory of the set of possible future trajectories. The vehicle is then maneuvered in order to avoid the final future trajectory and the object
DE 10 2013 001 228 A1 describes a method for determining a triggering criterion for braking and an emergency braking system for a vehicle.

US 2019/243371 A1 describes a safety procedure analysis for obstacle avoidance in autonomous vehicles. A vehicle-occupied trajectory and an object-occupied trajectory are generated at the time. An intersection between the vehicle-occupied trajectory and an object-occupied trajectory is determined based on comparing the vehicle-occupied trajectory to the object-occupied trajectory. Based on the intersection, the vehicle then executes a first safety procedure or an alternative procedure that, when implemented by the vehicle when the object implements a second safety procedure, is determined to have a lesser likelihood of incurring a collision between the vehicle and the object than the first safety procedure.

US 2018/005050 A1 describes a system to use submaps to control operation of a vehicle. A storage system is provided with a vehicle to store a collection of submaps that represent a geographic area where the vehicle may be driven. A programmatic interface is provided to receive submaps and submap updates independently of other submaps.

DE 10 2013 001 229 A1 describes a determination of an activation criterion for a brake application. To determine an activation criterion for outputting brake signals to a vehicle brake system at least one object in the environment of the vehicle is detected. A determination is made whether the vehicle is on a collision course with the object. If so, an avoidance criterion is determined, wherein an S-shaped avoidance trajectory of the vehicle is determined, from which an extreme value of a lateral acceleration of the vehicle is determined. The extreme value is compared with a threshold value. The avoidance criterion is met if the associated extreme value falls below the threshold value, and the activation criterion for the brake application is not met as long as the avoidance criterion is met.

US 2017/120902 A1 describes a method for robotic vehicle safety system activation. The method comprises steps of calculating, based in part on a location of an autonomous vehicle in an environment and a current trajectory of the autonomous vehicle. A location of an object in the environment is determined. A predictive rate of motion of the object is calculated, based on an object classification. A predicted object path of the object in the environment is generated and probabilities of impact between the object and the autonomous vehicle are predicted, based on the predicted object path and the trajectory of the autonomous vehicle. Data representing a predicted point of impact of the object with the autonomous vehicle is then calculated and the vehicle maneuvers, based on the predicted point of impact, to a preferred point of impact with the object.

JP 2010 228740 A describes a travel route generation device and a travel route generation method for calculating a travel route of a vehicle for avoiding contact with an obstacle.

US 2017/039855 A1 describes a vehicle drive control apparatus, including an object detection unit which detects positions, speeds, and sizes of objects around an own vehicle. A speed control unit detects a moving object existing in a place adjacent to a scheduled travelling path of the own vehicle. A speed change induction obstacle induces a future speed vector change of the moving object from the objects detected by the object detection unit and changes a speed of the own vehicle, on the basis of a relative position relation of the own vehicle and the detected moving object and the speed change induction obstacle.

US 2013/253816 A1 describes a system for detecting a pedestrian, the system including a base and a mast extending from the base. A plurality of sensors is mounted on the mast for detecting objects and pedestrians within a predetermined range. A path predicting circuit is in communication with a system vehicle and the pedestrian detection system. The path predicting circuit processes information from the system vehicle and pedestrian detection system to predict the path of the system vehicle and detected objects. The path predicting circuit is in communication with a path collision circuit and the predicted paths are mapped on the path collision circuit so as to determine if the system vehicle may possibly collide with a detected object.

US 2008/084283 A1 describes a method of facilitating safe operation of a vehicle, the vehicle having a vehicle operator and having a vehicle environment including an object. The method comprises steps of obtaining sensor data relating to the vehicle environment, and predicting a vehicle path within the vehicle environment and identifying a collision risk if the vehicle path and the object path intersect. The method further comprises an identifying step for a vehicle risk whether the vehicle path uncertainty is greater than a threshold uncertainty and a step of providing an alert on identifying the collision risk or the vehicle risk, the alert facilitating the safe operation of the vehicle.

### SUMMARY

The present invention is defined by the independent claims. Advantageous embodiments are described in the dependent claims, the following description and the drawings.

The present invention concerns implementing systems and methods for operating a vehicle. The methods comprises: generating, by a computing device, a vehicle trajectory for the vehicle that is in motion; detecting an object within a given distance from the vehicle; generating, by the computing device, first and second possible object trajectories for the object which was detected; selecting, by the computing device, a possible object trajectory from the first and second possible object trajectories which provides a worst-case collision scenario for the vehicle and the object which was detected; performing, by the computing device, a collision check to determine that there remains time to react safely to worst-case behavior by the object, the collision check being based on the vehicle trajectory and the selected possible object trajectory; and performing operations, by the computing device, to selectively cause the vehicle to perform an emergency maneuver based on results of the collision check. In some scenarios, at least one possible object trajectory includes, but is not limited to, a trajectory defined by the object's actual speed and actual direction of travel, a trajectory defined by the object's actual speed and another possible direction of travel for the object, a trajectory defined by another possible speed for the object and the object's actual direction of travel, or a trajectory defined by the another possible speed for the object and the another possible direction of travel for the object. The object may be classified into a class of a plurality of pre-defined classes. In this case, other possible speeds and direction of travels for the object are predefined for the class into which the object was classified.

In those or other scenarios, a plurality of possible object trajectories are generated by the computing device for the object that was detected. A possible object trajectory is selected from the plurality of possible object trajectories which provides a worst-case collision scenario for the vehicle. The selected possible object trajectory is used to determine whether there is an undesirable level of risk that a collision will occur between the vehicle and the object.

In those or other scenarios, the undesirable level of risk determination is made by: determining whether the vehicle trajectory and at least one possible object trajectory intersect each other; and determining a collision time when the vehicle trajectory and at least one possible object trajectory intersect each other. The collision time comprises a time at which the collision will occur if the vehicle trajectory is followed by the vehicle and at least one possible object trajectory is followed by the object. The collision time is compared to a threshold time value. A determination is made that there is an undesirable level of collision risk when the collision time is equal to or less than the threshold time value.

The present invention also concerns implementing systems and methods for operating a vehicle. The methods comprise: generating, by a computing device, a vehicle trajectory for the vehicle that is in motion; detecting an object within a given distance from the vehicle; generating, by the computing device, at least one possible object trajectory for the object which was detected; performing, by the computing device, a collision check to determine that there remains time to react safely to worst-case behavior by the object (where the collision check is based on the vehicle trajectory and at least one possible object trajectory); and performing operations, by the computing device, to selectively cause the vehicle to perform an emergency maneuver (e.g., accelerate-and-veer maneuver) or a cautious maneuver based on results of the collision check.

The collision check comprises determining whether the vehicle trajectory and at least one possible object trajectory intersect each other. The vehicle trajectory is deemed safe when a determination is made that the vehicle trajectory and at least one possible object trajectory do not intersect each other.

The collision check comprises determining a collision time when the vehicle trajectory and at least one possible object trajectory intersect each other. The collision time comprises a time at which the collision will occur if the vehicle trajectory is followed by the vehicle and at least one possible object trajectory is followed by the object. The collision time is compared to a threshold time value. The vehicle trajectory is deemed safe when the collision time is greater than the threshold time value.

The collision check comprises determining whether the collision can be avoided if the vehicle trajectory is followed by the vehicle and any one of a plurality of dynamically generated emergency maneuvers is performed in a pre-defined period of time, when the collision time is equal to or less than the threshold time value. The vehicle is selectively caused to perform the emergency maneuver when a determination is made that the collision cannot be avoided in the pre-defined period of time. The dynamically generated emergency maneuvers may include, but are not limited to, an emergency maneuver that includes a braking command and is determined based on the vehicle trajectory and at least one possible object trajectory, an emergency maneuver that includes at least two of a steering command, a braking command and an acceleration command, and that is determined via a gradient descent from an active vehicle trajectory on an objective function which penalizes collision and ride discomfort, and a pre-defined emergency maneuver that has been optimized via a gradient descent from the active vehicle trajectory on the objective function which penalizes collision and ride discomfort.

The systems comprise a processor and a non-transitory computer-readable storage medium. The non-transitory computer-readable storage medium comprises programming instructions that are configured to cause the processor to implement a method for operating a vehicle. The programming instructions comprise instructions to: generate a vehicle trajectory for the vehicle that is in motion; detect an object within a given distance from the vehicle; generate first and second possible object trajectory for the object which was detected; select, by the computing device, a possible object trajectory from the first and second possible object trajectories which provides a worst-case collision scenario for the vehicle and the object which was detected; perform a collision check to determine that there remains time to react safely to a worst-case behavior by the object (the collision check being based on the vehicle trajectory and at least one possible object trajectory); and selectively cause the vehicle to perform an emergency maneuver (e.g., accelerate-and-veer maneuver) or a cautious maneuver based on results of the collision check. The collision check comprises determining whether the vehicle trajectory and at least one possible object trajectory intersect each other. The vehicle trajectory is deemed safe when a determination is made that the vehicle trajectory and at least one possible object trajectory do not intersect each other.

The collision check comprises determining a collision time when the vehicle trajectory and at least one possible object trajectory intersect each other. The collision time comprises a time at which the collision will occur if the vehicle trajectory is followed by the vehicle and at least one possible object trajectory is followed by the object. The collision time is compared to a threshold time value. The vehicle trajectory is deemed safe when the collision time is greater than the threshold time value.

The collision check comprises determining whether the collision can be avoided if the vehicle trajectory is followed by the vehicle and any one of a plurality of dynamically generated emergency maneuvers is performed in a pre-defined period of time, when the collision time is equal to or less than the threshold time value. The vehicle is selectively caused to perform the emergency maneuver when a determination is made that the collision cannot be avoided in the pre-defined period of time. The dynamically generated emergency maneuvers may include, but are not limited to, an emergency maneuver that includes a braking command and is determined based on the vehicle trajectory and at least one possible object trajectory, an emergency maneuver that includes at least a steering command, and a braking command or an acceleration command, and that is determined via a gradient descent from an active vehicle trajectory on an objective function which penalizes collision and ride discomfort, and a pre-defined emergency maneuver that has been optimized via a gradient descent from the active vehicle trajectory on the objective function which penalizes collision and ride discomfort.

### BRIEF DESCRIPTION OF THE DRAWINGS

The present solution will be described with reference to the following drawing figures, in which like numerals represent like items throughout the figures.
FIG. 1 is an illustration of an illustrative system.
FIG. 2 is an illustration of an illustrative architecture for a vehicle.
FIG. 3 is an illustration of an illustrative computing device.
FIG. 4 provides a block diagram that is useful for understanding how trajectory based safekeeping of vehicles is achieved in accordance with the present solution.
FIGS. 5A-5B (collectively referred to herein as "FIG. 5") provides a flow diagram of an illustrative method for trajectory based safekeeping of vehicles.

### DETAILED DESCRIPTION

As used in this document, the singular forms "a," "an," and "the" include plural references unless the context clearly dictates otherwise. Unless defined otherwise, all technical and scientific terms used herein have the same meanings as commonly understood by one of ordinary skill in the art. As used in this document, the term "comprising" means "including, but not limited to." Definitions for additional terms that are relevant to this document are included at the end of this Detailed Description.

An "electronic device" or a "computing device" refers to a device that includes a processor and memory. Each device may have its own processor and/or memory, or the processor and/or memory may be shared with other devices as in a virtual machine or container arrangement. The memory will contain or receive programming instructions that, when executed by the processor, cause the electronic device to perform one or more operations according to the programming instructions.

The terms "memory," "memory device," "data store," "data storage facility" and the like each refer to a non-transitory device on which computer-readable data, programming instructions or both are stored. Except where specifically stated otherwise, the terms "memory," "memory device," "data store," "data storage facility" and the like are intended to include single device embodiments, embodiments in which multiple memory devices together or collectively store a set of data or instructions, as well as individual sectors within such devices.

The terms "processor" and "processing device" refer to a hardware component of an electronic device that is configured to execute programming instructions. Except where specifically stated otherwise, the singular term "processor" or "processing device" is intended to include both single-processing device embodiments and embodiments in which multiple processing devices together or collectively perform a process.

The term "vehicle" refers to any moving form of conveyance that is capable of carrying either one or more human occupants and/or cargo and is powered by any form of energy. The term "vehicle" includes, but is not limited to, cars, trucks, vans, trains, autonomous vehicles, aircraft, aerial drones and the like. An "autonomous vehicle" is a vehicle having a processor, programming instructions and drivetrain components that are controllable by the processor without requiring a human operator. An autonomous vehicle may be fully autonomous in that it does not require a human operator for most or all driving conditions and functions, or it may be semi-autonomous in that a human operator may be required in certain conditions or for certain operations, or that a human operator may override the vehicle's autonomous system and may take control of the vehicle.

In this document, when terms such as "first" and "second" are used to modify a noun, such use is simply intended to distinguish one item from another, and is not intended to require a sequential order unless specifically stated. In addition, terms of relative position such as "vertical" and "horizontal", or "front" and "rear", when used, are intended to be relative to each other and need not be absolute, and only refer to one possible position of the device associated with those terms depending on the device's orientation.

Real-time prediction of actions by drivers of other vehicles and pedestrians is a challenge for on-road semi-autonomous or autonomous vehicle applications. Such real-time prediction is particularly challenging when the drivers and/or pedestrians break traffic rules. Systematically assuming the worst case action from the drivers and/or pedestrians will paralyze the self-driving vehicle, but erroneously optimistic predictions can result in unsafe autonomous vehicle behavior.

Present invention describes methods and systems that are directed to addressing the problems described above, and/or other issues. Accordingly, the present solution concerns systems and methods for trajectory based safekeeping of vehicles. The methods inter alia involve: generating a vehicle trajectory for the vehicle that is in motion; detecting an object within a given distance from the vehicle; generating at least one possible object trajectory for the object which was detected; using the vehicle trajectory and at least one possible object trajectory to determine whether there is an undesirable level of risk that a collision will occur between the vehicle and the object; and modifying the vehicle trajectory when a determination is made that there is an undesirable level of risk that the collision will occur.

The undesirable level of risk determination is inter alia made by: determining whether the vehicle trajectory and at least one possible object trajectory intersect each other; and determining a collision time when the vehicle trajectory and at least one possible object trajectory intersect each other. The collision time comprises a time at which the collision will occur if the vehicle trajectory is followed by the vehicle and at least one possible object trajectory is followed by the object. The collision time is compared to a threshold time value. A determination is made that there is an undesirable level of collision risk when the collision time is equal to or less than the threshold time value.

The present solution also involves methods for operating a vehicle that involve: generating a vehicle trajectory for the vehicle that is in motion; detecting an object within a given distance from the vehicle; generating at least one possible object trajectory for the object which was detected; performing a collision check to determine that there remains time to react safely to worst-case behavior by the object (where the collision check is based on the vehicle trajectory and at least one possible object trajectory); and selectively causing the vehicle to perform an emergency maneuver based on results of the collision check.

The collision check inter alia comprises: determining whether the vehicle trajectory and at least one possible object trajectory intersect each other; determining a collision time when the vehicle trajectory and at least one possible object trajectory intersect each other; and comparing the collision time to a threshold time value. The collision time comprises a time at which the collision will occur if the vehicle trajectory is followed by the vehicle and at least one possible object trajectory is followed by the object.

The collision check also comprises: determining whether the collision can be avoided if the vehicle trajectory is followed by the vehicle and any one of a plurality of dynamically generated emergency maneuvers is performed in a pre-defined period of time, when the collision time is equal to or less than the threshold time value. The vehicle is selectively caused to perform the emergency maneuver (e.g., an accelerate-and-veer maneuver to avoid the collision) when a determination is made that the collision cannot be avoided in the pre-defined period of time.

The present solution has many novel features. For example, unlike some conventional solutions, the complexity of the present solution is not exponential in the number of possible mover trajectories. The present solution also explicitly deviates from optimal behavior (in most-likely-case by the minimal steering/braking modification needed to keep the AV safe, and explicitly allows for an accelerate-and-veer maneuver if such a maneuver is necessary to avoid a collision. The present solution additionally allows generation and execution of AV plans that will collide with a worst-case predicted behavior from another mover, as long as a determination is made that there remains time to react safely to the worst-case behavior, should the event occur. This ability to selectively plan and execute a trajectory that collides with a worst-case predicted behavior from another actor, while still ensuring the AV is in a safe state, is key to preventing overly hesitant AV behavior. Finally, the present solution (1) computes a safe escape trajectory which can be rapidly executed in the future (without the need for additional planning) in the event that the worst-case predictions come true, or (2) computes a damage-minimization trajectory with the least-bad consequences (according to an application-defined smooth objective function) if (1) is not possible.

### Illustrative Systems

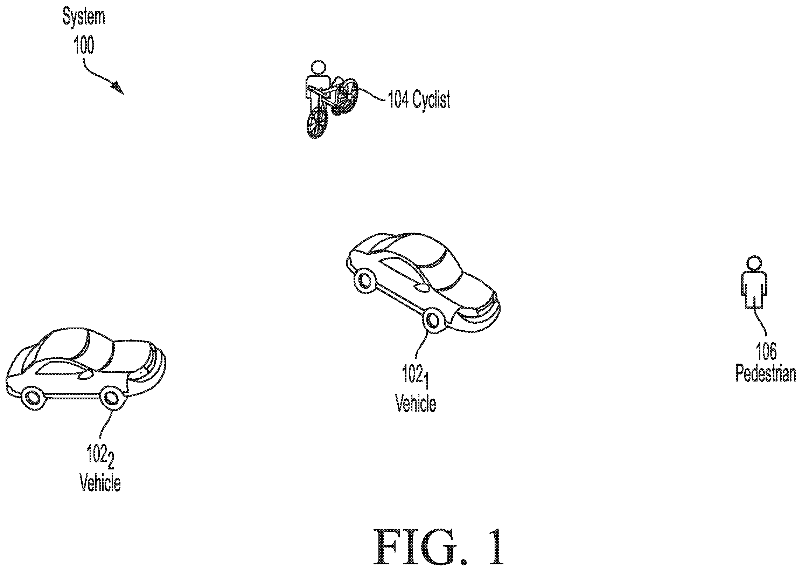

Referring now to FIG. 1, there is provided an illustration of an illustrative system **100.** System **100** comprises a vehicle **1021** that is traveling along a road in a semi-autonomous or autonomous manner. Vehicle **1021** is also referred to herein as an Autonomous Vehicle ("AV"). The AV **1021** can include, but is not limited to, a land vehicle (as shown in FIG. 1), an aircraft, or a watercraft.

AV **102₁** is generally configured to detect objects **102₂, 104, 106** in proximity thereto. The objects can include, but are not limited to, a vehicle **102₂,** cyclist **104** (such as a rider of a bicycle, electric scooter, motorcycle, or the like) and/or a pedestrian **106.** When such a detection is made, AV **1021** performs operations to: generate one or more possible object trajectories for the detected object; and analyze at least one of the generated possible object trajectories to determine whether or not there is an undesirable level of risk that a collision will occur between the AV and object in a threshold period of time (e.g., 1 minute). If so, the AV **1021** performs operations to determine whether the collision can be avoided if a given vehicle trajectory is followed by the AV **1021** and any one of a plurality of dynamically generated emergency maneuvers is performed in pre-defined time period (e.g., ***N*** milliseconds). If the collision can be avoided, then the AV **1021** takes no action or optionally performs a cautious maneuver (e.g., mildly slows down). In contrast, if the collision cannot be avoided, then the AV **1021** immediately takes an emergency maneuver (e.g., brakes and/or changes direction of travel).

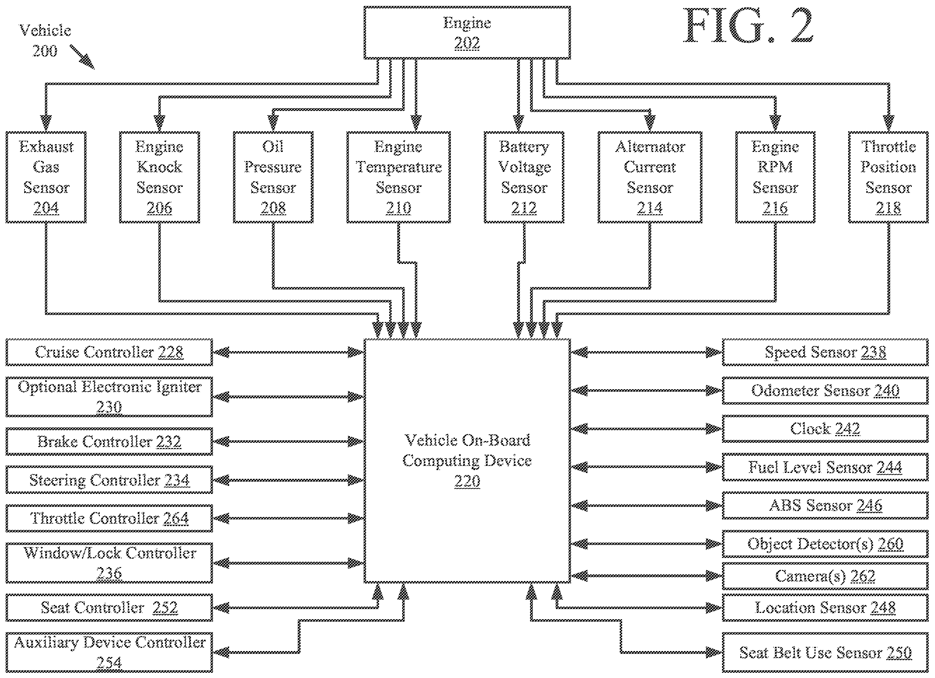

Referring now to FIG. 2, there is provided an illustration of an illustrative system architecture **200** for a vehicle. Vehicles **1021** and/or **102₂** of FIG. 1 can have the same or similar system architecture as that shown in FIG. 2. Thus, the following discussion of system architecture **200** is sufficient for understanding vehicle(s) **102₁**, **102₂** of FIG. 1.

As shown in FIG. 2, the vehicle **200** includes an engine **202** and a plurality of sensors **204-218** measuring various parameters of the engine **202.** Still, it should be noted that the sensors, in some examples, may comprise an exhaust gas sensor **204,** an engine knock sensor **206,** an oil pressure sensor **208,** an engine temperature sensor **210,** a battery voltage sensor **212,** an alternator current sensor **214,** an engine RPM sensor **216,** and a throttle position sensor **218.** Other sensors **238, 240, 244-250, 260** are also provided in the vehicle **200.** These sensors include a speed sensor **238,** an odometer sensor **240,** a fuel level sensor **244,** an ABS sensor **246,** a location sensor **248** (e.g., a GPS device), a seat belt use sensor **250,** and/or object detectors **260.** Vehicle **200** also comprise one or more cameras **262.** The object detectors **260** and/or cameras **262** allow an object to be detected within a given distance range of the vehicle **200** in any direction.

During operations, information is communicated from the sensors **238, 240, 244-250,** to an on-board computing device **220.** The on-board computing device **220** analyzes the engine parameter measurement data from the sensors **204-218,** and optionally controls operations of the vehicle based on results of the analysis. For example, the on-board computing device **220** controls braking via a brake controller **232.** The brake controller **232** can include a camera. Alternatively or additionally, the following features of the vehicle are controlled: engine speed via throttle controller **264;** vehicle speed via throttle controller **264;** gear of transmission; and/or vehicle steering via steering controller **234.** The present solution is not limited in this regard. Other operations of the vehicle **200** can be controlled by the on-board computing device **220** via a cruise controller **228,** an electronic ignitor **230,** a window/lock controller **236,** and/or a seat controller. Auxiliary devices of the vehicle can be controlled via the auxiliary device controller **254.** The auxiliary devices include, but are not limited to, a radio, a display, a near-field or short-range (e.g., Bluetooth^{™}) enabled device (e.g., a mobile phone or SRC-System^{™}) or any other device (e.g., a speed radar) communicatively coupled to the on-board computing device **220.**

Object detection information is communicated from object detector(s) **260** to the on-board computing device **220.** Additionally, captured images are communicated from the camera(s) **262** to the on-board computing device **220.** The object detection information and/or captured images are processed by the on-board computing device **220** to detect objects in proximity to the vehicle **200.** Techniques for making an object detection based on sensor data and/or captured images are well known in the art. Any known or to be known technique for making an object detection based on sensor data and/or captured images can be used herein. made

When such an object detection is made, the on-board computing device **220** performs operations to: generate one or more possible object trajectories for the detected object; and analyze at least one of the generated possible object trajectories to determine if there is a risk of a collision in a threshold period of time (e.g., 1 minute). If so, the on-board computing device **220** performs operations to determine whether the collision can be avoided if a given vehicle trajectory is followed by the vehicle **200** and any one of a plurality of dynamically generated emergency maneuvers is performed in pre-defined time period (e.g., ***N*** milliseconds). If the collision can be avoided, then the on-board computing device **220** takes no action to change the vehicle trajectory or optionally causes the vehicle **200** to perform a cautious maneuver (e.g., mildly slows down). In contrast, if the collision cannot be avoided, then the on-board computing device **220** causes the vehicle **200** to immediately take an emergency maneuver (e.g., brakes and/or changes direction of travel).

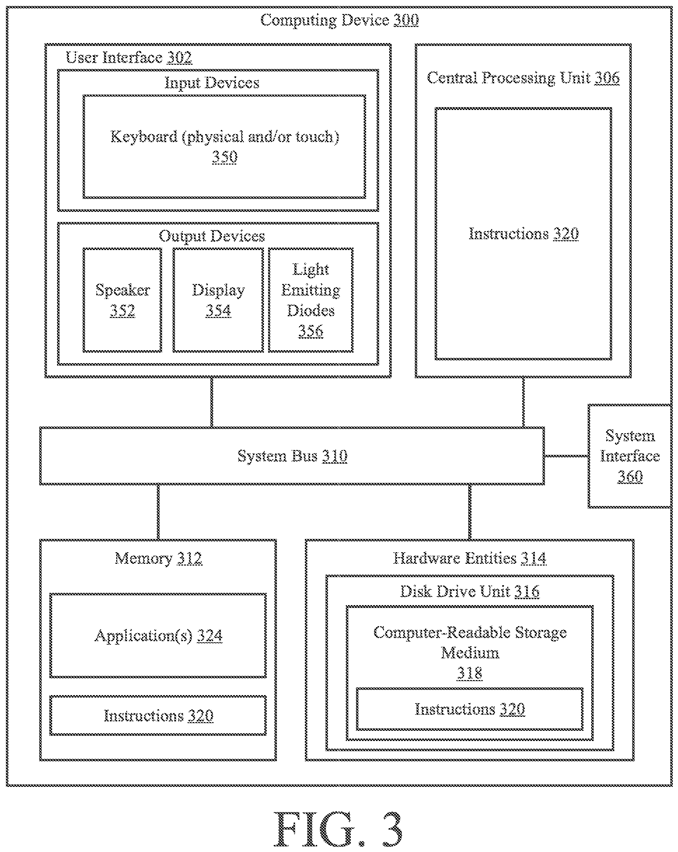

Referring now to FIG. 3, there is provided an illustration of an illustrative architecture for a computing device **300.** The vehicle on-board computing device **220** of FIG. 2 is the same as or similar to computing device **300.** As such, the discussion of computing device **300** is sufficient for understanding the vehicle on-board computing device **220** of FIG. 2.

Computing device **300** may include more or less components than those shown in FIG. 3. However, the components shown are sufficient to disclose an illustrative solution implementing the present solution. The hardware architecture of FIG. 3 represents one implementation of a representative computing device configured to operate a vehicle, as described herein. As such, the computing device **300** of FIG. 3 implements at least a portion of the method(s) described herein.

Some or all components of the computing device **300** can be implemented as hardware, software and/or a combination of hardware and software. The hardware includes, but is not limited to, one or more electronic circuits. The electronic circuits can include, but are not limited to, passive components (e.g., resistors and capacitors) and/or active components (e.g., amplifiers and/or microprocessors). The passive and/or active components can be adapted to, arranged to and/or programmed to perform one or more of the methodologies, procedures, or functions described herein.

As shown in FIG. 3, the computing device **300** comprises a user interface **302,** a Central Processing Unit ("CPU") **306,** a system bus **310,** a memory **312** connected to and accessible by other portions of computing device **300** through system bus **310,** a system interface **360,** and hardware entities **314** connected to system bus **310.** The user interface can include input devices and output devices, which facilitate user-software interactions for controlling operations of the computing device **300.** The input devices include, but are not limited to, a physical and/or touch keyboard **350.** The input devices can be connected to the computing device **300** via a wired or wireless connection (e.g., a Bluetooth^{®} connection). The output devices include, but are not limited to, a speaker **352,** a display **354,** and/or light emitting diodes **356.** System interface **360** is configured to facilitate wired or wireless communications to and from external devices (e.g., network nodes such as access points, etc.).

At least some of the hardware entities **314** perform actions involving access to and use of memory **312,** which can be a Random Access Memory ("RAM"), a disk drive, flash memory, a Compact Disc Read Only Memory ("CD-ROM") and/or another hardware device that is capable of storing instructions and data. Hardware entities **314** can include a disk drive unit **316** comprising a computer-readable storage medium **318** on which is stored one or more sets of instructions **320** (e.g., software code) configured to implement one or more of the methodologies, procedures, or functions described herein. The instructions **320** can also reside, completely or at least partially, within the memory **312** and/or within the CPU **306** during execution thereof by the computing device **300.** The memory **312** and the CPU **306** also can constitute machine-readable media. The term "machine-readable media", as used here, refers to a single medium or multiple media (e.g., a centralized or distributed database, and/or associated caches and servers) that store the one or more sets of instructions **320.** The term "machine-readable media", as used here, also refers to any medium that is capable of storing, encoding or carrying a set of instructions **320** for execution by the computing device **300** and that cause the computing device **300** to perform any one or more of the methodologies of the present invention.

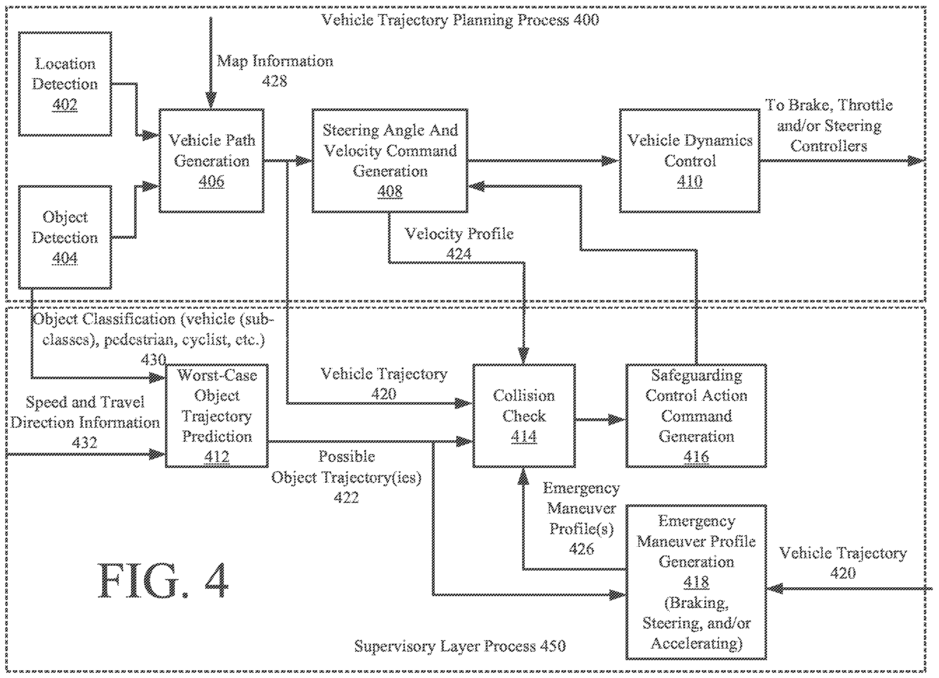

Referring now to FIG. 4, there is provided a block diagram that is useful for understanding how trajectory based safekeeping of vehicles is achieved in accordance with the present solution. All of the operations performed in blocks **402-418** can be performed by the on-board computing device of a vehicle (e.g., AV **1021** of FIG. 1).

In block **402,** a location of the vehicle is detected. This detection can be made based on sensor data output from a location sensor (e.g., location sensor **248** of FIG. 2) of the vehicle. This sensor data can include, but is not limited to, Global Positioning System ("GPS") data. The detected location of the vehicle is then passed to block **406.**

In block **404,** an object is detected within proximity of the vehicle. This detection is made based on sensor data output from an object detector (e.g., object detector **260** of FIG. 2) or a camera (e.g., camera **262** of FIG. 2) of the vehicle. Information about the detected object is passed to block **406.** This information includes, but is not limited to, a speed of the object and/or a direction of travel of the object.

In block **406,** a vehicle trajectory is generated using the information from blocks **402** and **404.** Techniques for determining a vehicle trajectory are well known in the art, and therefore will not be described herein. Any known or to be known technique for determining a vehicle trajectory can be used herein without limitation. In some scenarios, the vehicle trajectory **420** is determined based on the location information from block **402,** the object detection information from block **404,** and map information **428** (which is prestored in a data store of the vehicle). The vehicle trajectory **420** represents a smooth path that does not have abrupt changes that would otherwise provide passenger discomfort. The vehicle trajectory **420** is then provided to block **408.**

In block **408,** a steering angle and velocity command is generated based on the vehicle trajectory **420.** The steering angle and velocity command is provided to block **410** for vehicle dynamics control.

Notably, the present solution augments the above-described vehicle trajectory planning process **400** of blocks **402-410** with an additional supervisory layer process **450.** The additional supervisory layer process **450** optimizes the vehicle trajectory for the most likely behavior of the objects detected in block **404,** but nonetheless maintains safety if worst-case behaviors occurs. This additional supervisory layer process **450** is implemented by blocks **412-418.**

As shown in FIG. 4, an object classification is performed in block **404** to classify the detected object into one of a plurality of classes and/or sub-classes. The classes can include, but are not limited to, a vehicle class and a pedestrian class. The vehicle class can have a plurality of vehicle sub-classes. The vehicle sub-classes can include, but are not limited to, a bicycle sub-class, a motorcycle sub-class, a skateboard sub-class, a roller blade sub-class, a scooter sub-class, a sedan sub-class, an SUV sub-class, and/or a truck sub-class. The object classification is made based on sensor data output from an object detector (e.g., object detector **260** of FIG. 2) and/or a camera (e.g., camera **262** of FIG. 2) of the vehicle. Techniques for classifying objects based on sensor data and/or imagery data are well known in the art, and therefore will not be described herein. Any known or to be known object classification technique can be used herein without limitation. Information **430** specifying the object's classification is provided to block **412,** in addition to the information **432** indicating the object's actual speed and direction of travel.

Block **412** involves determining one or more possible object trajectories for the object detected in **404.** The possible object trajectories can include, but are not limited to, the following trajectories:
- a trajectory defined by the object's actual speed (e.g., 1 mile per hour) and actual direction of travel (e.g., west);
- a trajectory defined by the object's actual speed (e.g., 1 mile per hour) and another possible direction of travel (e.g., south, south-west, or X (e.g., 40°) degrees from the object's actual direction of travel in a direction towards the AV) for the object;
- a trajectory defined by another possible speed for the object (e.g., 2-10 miles per hour) and the object's actual direction of travel (e.g., west); and/or
- a trajectory defined by another possible speed for the object (e.g., 2-10 miles per hour) and another possible direction of travel (e.g., south, south-west, or X (e.g., 40°) degrees from the object's actual direction of travel in a direction towards the AV) for the object. The possible speed(s) and/or possible direction(s) of travel may be pre-defined for objects in the same class and/or sub-class as the object. The one or more possible object trajectories **422** is(are) then passed to block **414.**

In the case that two or more possible object trajectories are determined, then **412** may optionally also involve selecting one of the possible object trajectories which provides a worst-case collision scenario for the AV. This determination is made based on information **432** indicating the AV's actual speed and direction of travel. The selected possible object trajectory is then passed to block **414,** instead of all the possible object trajectories determined in **412.**

In block **414,** a collision check is performed for each of the possible object trajectories **422** passed to block **414.** The collision check involves determining whether there is an undesirable level of risk that a collision will occur between the vehicle and the object. Such a determination is made by first determining if the vehicle trajectory **420** and a given possible object trajectory **422** intersect. If the two trajectories **420, 422** do not intersect, then the vehicle trajectory **420** is deemed to be a safe vehicle trajectory and no safeguarding control action is taken to modify the vehicle trajectory.

In contrast, if the two trajectories **420, 422** do intersect, then a predicted time at which a collision would occur if the two trajectories are followed is determined. The predicted time is compared to a threshold value (e.g., 1 second). If the predicted time exceeds the threshold value, then the vehicle trajectory **420** is deemed to be a safe vehicle trajectory and no safeguarding control action is taken to modify the vehicle trajectory.

If the predicted time is equal to or less than the threshold value, then a determination is made as to whether the collision can be avoided if (a) the vehicle trajectory is followed by the AV and (b) any one of a plurality of dynamically generated emergency maneuvers is performed in a pre-defined time period (e.g., ***N*** milliseconds). The dynamically generated emergency maneuvers include, but are not limited to, the following:
- an emergency maneuver that comprises a braking command and that is determined based on the vehicle trajectory and a possible object trajectory;
- an emergency maneuver that comprises at least a steering command, and a braking command or an acceleration command, and that is determined via a gradient descent from the active AV trajectory on an objective function which penalizes collision and/or ride discomfort; and/or
- an emergency maneuver that comprises a pre-defined emergency maneuver that has been optimized via a gradient descent from the active AV trajectory on an objective function which penalizes collision and/or ride discomfort.

In some scenarios, an emergency braking maneuver is produced by postulating a trajectory that maintains the intended trajectory for the pre-defined time period (N milliseconds) and then decelerates at a maximum braking profile parameterized by maximum allowable deceleration and jerk limits. The maximum braking profile is produced along the original trajectory via Euler integration of a new velocity profile, or by other methods. The present solution is not limited to the particulars of these scenarios.

In those or other scenarios, an emergency maneuver that comprises both steering and braking is generated by: parameterizing both steering and braking with a limited set of spline points (e.g., 4 spline points for steering and 3 spline points for velocity); minimizing an objective function which penalizes collision and/or ride discomfort, as a function of those parameters, using conjugate gradient descent, Newton's method, Powell's method, or other existing method(s) for minimizing multivariate functions; and computing the trajectory corresponding from the parameterized spline points with the minimal objective function cost. The present solution is not limited to the particulars of these scenarios.

In those or other scenarios, a pre-defined emergency maneuver is generated by recording commands from a human operator during a simulated emergency braking event, or by sampling a small set of steering torques and braking profiles applied to the current vehicle state. These torques are computed at constant intervals from zero up until the limits of the steering and brake mechanism, or by other methods. The present solution is not limited to the particulars of these scenarios.

If it is determined that the collision can be avoided in the pre-defined time period, then the vehicle trajectory **420** is deemed to be a safe vehicle trajectory and no safeguarding control action is taken to modify the vehicle trajectory. Alternatively, the AV is caused to perform a cautious maneuver (e.g., mildly slow down such as by 5-10 mph). Techniques for causing an AV to take a cautious maneuver such as slowing down are well known in the art, and therefore will not be described herein. For example, a safeguarding control action command is generated as shown by **416,** and used to adjust or otherwise modify the vehicle trajectory at **408** prior to being passed to block **410.** The vehicle trajectory can be adjusted or otherwise modified to cause the vehicle to decelerate, cause the vehicle to accelerate, and/or cause the vehicle to change its direction of travel.

In contrast, if it is determined that the collision cannot be avoided in the pre-defined time period, then the AV is caused to immediately take an emergency maneuver. This emergency maneuver may include one of the dynamically generated emergency maneuvers discussed above. Techniques for causing an AV to take emergency maneuvers are well known in the art, and therefore will not be described herein.

### Illustrative Methods

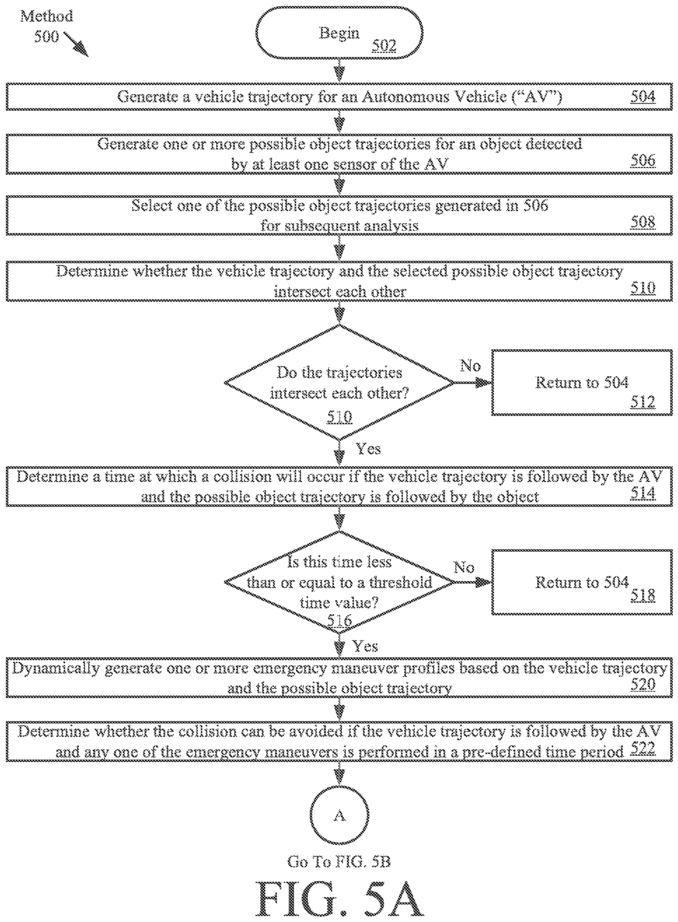

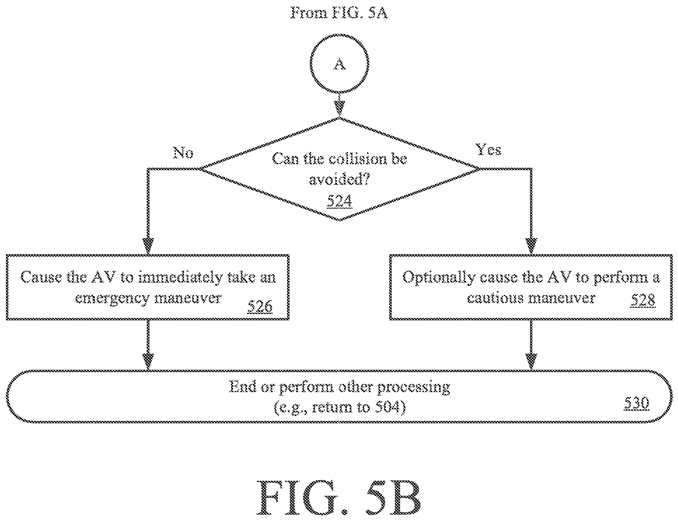

Referring now to FIG. 5, there is provided a flow diagram of an illustrative method **500** for trajectory based safekeeping of vehicles (e.g., vehicle **1021** of FIG. 1). At least a portion of method **500** is performed by a vehicle on-board computing device (e.g., vehicle on-board computing device **220** of FIG. 2). Method **500** is performed for each object (e.g., vehicle **102₂** of FIG. 1, cyclist **104** of FIG. 1, and/or pedestrian **106** of FIG. 1) that has been detected to be within a distance range from the vehicle at any given time.

Method **500** comprises a plurality of operations **502-530.** The present solution is not limited to the particular order of operations **502-530** shown in FIG. 5. For example, the operations of **520** can be performed in parallel with the operations of **504-518,** rather than subsequent to as shown in FIG. 5.

As shown in FIG. 5A, method **500** begins with **502** and continues with **504** where a vehicle trajectory (e.g., vehicle trajectory **420** of FIG. 4) for an AV is generated. The vehicle trajectory represents a smooth path that does not have abrupt changes that would otherwise provide passenger discomfort. Techniques for determining a vehicle trajectory are well known in the art, and therefore will not be described here. Any known or to be known technique for determining a vehicle trajectory can be used herein without limitation. In some scenarios, the vehicle trajectory is determined based on location information generated by a location sensor (e.g., location sensor **248** of FIG. 2) of the AV, object detection information generated by at least one object detector (e.g., object detector **260** of FIG. 2) of the AV, images captured by at least one camera (e.g., camera **262** of FIG. 2) of the AV, and map information stored in a memory (e.g., memory **312** of FIG. 3) of the AV. In other scenarios, lane information is used as an alternative to or in addition to the location information and/or map information.

Once the vehicle trajectory is generated, method **500** continues with **506** where one or more possible object trajectories (e.g., possible object trajectories **422** of FIG. 4) are determined for an object (e.g., vehicle **102₂,** cyclist **104** or pedestrian **106** of FIG. 1) detected by at least one sensor (e.g., sensor **260** or camera **262** of FIG. 2) of the AV. The possible object trajectories can include, but are not limited to, the following trajectories: a trajectory defined by the object's actual speed (e.g., 1 mile per hour) and actual direction of travel (e.g., west); a trajectory defined by the object's actual speed (e.g., 1 mile per hour) and another possible direction of travel (e.g., south, south-west, or X (e.g., 40°) degrees from the object's actual direction of travel in a direction towards the AV); a trajectory defined by another possible speed for the object (e.g., 2-10 miles per hour) and the object's actual direction of travel (e.g., west); and/or a trajectory defined by another possible speed for the object (e.g., 2-10 miles per hour) and another possible direction of travel (e.g., south or south-west or X (e.g., 40°) degrees from the object's actual direction of travel in a direction towards the AV). The possible speed(s) and/or possible direction(s) of travel may be pre-defined for objects in the same class and/or sub-class as the object.

Next in **508,** one of the possible object trajectories is selected for subsequent analysis. In some scenarios, the operations of **510-528** are performed (e.g., in an iterative or parallel manner) for each possible object trajectory generated in **506.** In other scenarios, the operations of **510-528** are performed for only one of the possible object trajectories which provides a worst-case collision scenario for the AV. This worst-case possible object trajectory is selected based on information indicating the AV's actual speed and direction of travel (e.g., generated by a speed sensor **238** of FIG. 2 and/or location sensor **248** of FIG. 2). A worst-collision scenario may include, but is not limited to, a collision scenario which is to occur sooner than all other collision scenarios provided by the possible object trajectories and/or is expected to result in serious injury or death (e.g., a high speed, side-impact collision or a high speed, head-on collision). In yet other scenarios, the operations **510-528** are performed for two or more of the possible object trajectories which provide the top ***Z*** (e.g., 2 or 5) worst-case collision scenarios for the AV. ***Z*** is an integer selected in accordance with a particular application. The present solution is not limited to the particulars of these scenarios.

In next **510,** a determination is made as to whether the vehicle trajectory generated in **504** and the possible object trajectory selected in **508** intersect each other. If the two trajectories do not intersect each other **[510:NO],** then **512** is performed where method **500** returns to **504.**

In contrast, if the two trajectories do intersect each other **[510:YES],** then method **500** continues to **514** where a time value is determined. This time value represents a time at which a collision will occur if the vehicle trajectory is followed by the AV and the possible object trajectory is followed by the object. The time value determined in **514** is then compared to a threshold time value, as shown by **516.** The threshold time value is selected in accordance with a given application (e.g., one or more seconds). If the time value is greater than the threshold time value **[516:NO],** then **518** is performed where method **500** returns to **504.** If the time value is equal to or less than the threshold time value **[516:YES],** then method **500** continues with **520-522. 520-522** involve: dynamically generating one or more emergency maneuver profiles based on the vehicle trajectory and the possible object trajectory; and determine whether the collision can be avoided if the vehicle trajectory is followed by the AV and any one of the emergency maneuvers is performed in a pre-defined time period (e.g., ***N*** milliseconds). Upon completing **522,** method **500** continues with **524** of FIG. 5B.

Referring now to FIG. 5B, if the collision cannot be avoided in the pre-defined time period **[524:NO],** then **526** is performed where the AV is caused to immediately take an emergency maneuver. The emergency maneuver can include, but is not limited to, one of the dynamically generated emergency maneuvers discussed above in relation to **520.** Techniques for causing an AV to take emergency maneuvers are well known in the art, and therefore will not be described herein. Any known or to be known technique for causing an AV to take emergency maneuvers can be used here. Subsequently, **530** is performed where method **500** ends or other processing is performed.

In contrast, if the collision can be avoided in the pre-defined time period **[524:YES],** then **528** is performed where the AV is optionally caused to perform a cautious maneuver (e.g., mildly slow down). Techniques for causing an AV to take a cautious maneuver such as slowing down are well known in the art, and therefore will not be described herein. Any known or to be known technique for causing an AV to take a cautious maneuver can be used here. Subsequently, **530** is performed where method **500** ends or other processing is performed.

The following text outlines an illustrative process for providing rapid collision checking of the same path along multiple velocity profiles, for efficient implementation of the above described method. First, a table of intersections is generated between real time predictions of drive actions and a polygon defined by a trajectory. The polygon is created by the autonomous vehicles trajectory, the autonomous vehicles dimensions, and a vector of projections of the autonomous vehicle along a distance. This prepares the intersection table and the real time projection set needed for the rest of the process. Next, a determination is made as to whether a candidate list of autonomous vehicle projections violates collision rules. If not, then the trajectory is considered safe. Temporal profiles for pedestrians, cars, statics and other movable things are obtained. Thereafter, a modified autonomous vehicle trajectory projection list is generated based on the temporal profiles. Least-conflicted projections for a given collision table are computed using the modified autonomous vehicle trajectory projection list. A modified motion control trajectory is computed based on the least-conflicted projections. This is needed to create a trajectory in the form needed for actual execution. The present solution is not limited to the particulars of this illustrative process.

## Claims

1. A method (500) for operating a vehicle (102₁, 200), comprising:
generating, by a computing device (220, 300), a vehicle trajectory (420) for a vehicle (102₁, 200) that is in motion;
detecting an object (102₂, 104, 106) within a given distance from the vehicle (102₁, 200);
generating, by the computing device (220, 300), first and second possible object trajectories for the object (102₂, 104, 106) which was detected;
selecting, by the computing device (220, 300), a possible object trajectory (422) from the first and second possible object trajectories which provides a worst-case collision scenario for the vehicle (102₁, 200) and the object (102₂, 104, 106) which was detected;
performing, by the computing device (220, 300), a collision check (414) to determine that there remains time to react safely to worst-case behavior by the object (102₂, 104, 106), the collision check (414) being based on the vehicle trajectory (420) and the selected possible object trajectory (422); and
performing operations, by the computing device (220, 300), to selectively cause the vehicle (102₁, 200) to perform an emergency maneuver based on results of the collision check (414), **characterized in that** the collision check (414) comprises: determining whether the vehicle trajectory (420) and the possible object trajectory (422) intersect each other; determining a collision time (514) when the vehicle trajectory (420) and the possible object trajectory (422) intersect each other, the collision time (514) comprising a time at which the collision will occur if the vehicle trajectory is followed by the vehicle (102₁, 200) and the object trajectory is followed by the object (102₂, 104, 106); comparing the collision time (514) to a threshold time value (516); and determining whether the collision can be avoided if the vehicle trajectory (420) is followed by the vehicle (102₁, 200) and any one of a plurality of dynamically generated emergency maneuvers is performed in a pre-defined period of time, when the collision time (514) is equal to or less than the threshold time value (516).

2. The method (500) according to claim 1, wherein at least one of the first and second possible object trajectories comprises
a trajectory defined by the object's (102₂, 104, 106) actual speed and actual direction of travel,
a trajectory defined by the object's (102₂, 104, 106) actual speed and another possible direction of travel for the object (102₂, 104, 106),
a trajectory defined by another possible speed for the object (102₂, 104, 106) and the object's (102₂, 104, 106) actual direction of travel, or
a trajectory defined by the another possible speed for the object (102₂, 104, 106) and the another possible direction of travel for the object (102₂, 104, 106).

3. The method (500) according to claim 2, further comprising classifying the object (102₂, 104, 106) into a class of a plurality of pre-defined classes.

4. The method (500) according to claim 3, wherein the another possible speed for the object (102₂, 104, 106) and the another possible direction of travel for the object (102₂, 104, 106) are predefined for the class into which the object (102₂, 104, 106) was classified.

5. The method according any of the preceding claims, wherein a threshold probability that a collision will occur is met when the vehicle trajectory (420) and the selected possible object trajectory (422) intersect each other.

6. The method according to claim 1, wherein the vehicle (102₁, 200) is selectively caused to perform the emergency maneuver when a determination is made that the collision cannot be avoided in the pre-defined period of time.

7. The method according to claim 1, wherein the plurality of dynamically generated emergency maneuvers comprise
an emergency maneuver that includes a braking command and is determined based on the vehicle trajectory (420) and the selected possible object trajectory (422),
an emergency maneuver that includes at least a steering command, and a braking command or an acceleration command, and that is determined via a gradient descent from an active vehicle trajectory (420) on an objective function which penalizes collision and ride discomfort, comprising:
• parameterizing both steering and braking / acceleration with a limited set of spline points;
• minimizing the objective function which penalizes collision and ride discomfort, as a function of those parameters, using conjugate gradient descent, Newton's method, Powell's method, or another method for minimizing multivariate functions; and
• computing the trajectory corresponding from the parameterized spline points with the minimal objective function cost,
and
a pre-defined emergency maneuver that has been optimized via a gradient descent from the active vehicle trajectory (420) on the objective function which penalizes collision and ride discomfort.

8. The method according to any of the preceding claims, wherein the emergency maneuver comprises an accelerate-and-veer maneuver to avoid a collision.

9. A system, comprising:
a processor;
a non-transitory computer-readable storage medium comprising programming instructions that are configured to cause the processor to implement a method (500) for operating a vehicle (102₁, 200), wherein the programming instructions comprise instructions to:
generate a vehicle trajectory (420) for the vehicle (102₁, 200) that is in motion;
detect an object (102₂, 104, 106) within a given distance from the vehicle (102₁, 200);
generate first and second possible object trajectories (422) for the object (102₂, 104, 106) which was detected;
select, by the computing device (220, 300), a possible object trajectory (422) from the first and second possible object trajectories which provides a worst-case collision scenario for the vehicle and the object (102₂, 104, 106) which was detected;
perform a collision check (414) to determine that there remains time to react safely to worst-case behavior by the object (102₂, 104, 106), the collision check (414) being based on the vehicle trajectory (420) and the selected possible object trajectory (422); and
selectively cause the vehicle (102₁, 200) to perform an emergency maneuver based on results of the collision check (414), wherein the collision check (414) comprises: determining whether the vehicle trajectory (420) and the possible object trajectory (422) intersect each other; determining a collision time (514) when the vehicle trajectory (420) and the possible object trajectory (422) intersect each other, the collision time (514) comprising a time at which the collision will occur if the vehicle trajectory is followed by the vehicle (102₁, 200) and the object trajectory is followed by the object (102₂, 104, 106); comparing the collision time (514) to a threshold time value (516); and determining whether the collision can be avoided if the vehicle trajectory (420) is followed by the vehicle (102₁, 200) and any one of a plurality of dynamically generated emergency maneuvers is performed in a pre-defined period of time, when the collision time (514) is equal to or less than the threshold time value (516);
wherein the system is adapted to perform a method (500) according to any of the preceding claims.

## Patentansprüche

1. Verfahren (500) zum Betreiben eines Fahrzeugs (102₁, 200), Folgendes umfassend:
Erzeugen, durch eine Rechenvorrichtung (220, 300), einer Fahrzeugtrajektorie (420) für ein in Bewegung befindliches Fahrzeug (102₁, 200);
Erfassen eines Objekts (102₂, 104, 106) innerhalb einer vorgegebenen Entfernung von dem Fahrzeug (102₁, 200);
Erzeugen, durch die Rechenvorrichtung (220, 300), einer ersten und einer zweiten möglichen Objekttrajektorie für das erfasste Objekt (102₂, 104, 106);
Auswählen, durch die Rechenvorrichtung (220, 300), einer möglichen Objekttrajektorie (422) aus der ersten und der zweiten möglichen Objekttrajektorie, die ein Worst-Case-Kollisionsszenario für das Fahrzeug (102₁, 200) und das erfasste Objekt (102₂, 104, 106) bereitstellt;
Durchführen, durch die Rechenvorrichtung (220, 300), einer Kollisionsprüfung (414), um zu bestimmen, dass noch Zeit verbleibt, um sicher auf das Worst-Case-Verhalten des Objekts (102₂, 104, 106) zu reagieren, wobei die Kollisionsprüfung (414) auf der Fahrzeugtrajektorie (420) und der ausgewählten möglichen Objekttrajektorie (422) basiert; und
Durchführen von Vorgängen, durch die Rechenvorrichtung (220, 300), um das Fahrzeug (102₁, 200) selektiv zu veranlassen, ein Notfallmanöver basierend auf Ergebnissen der Kollisionsprüfung (414) durchzuführen, **dadurch gekennzeichnet, dass**
die Kollisionsprüfung (414) Folgendes umfasst: Bestimmen, ob sich die Fahrzeugtrajektorie (420) und die mögliche Objekttrajektorie (422) schneiden; Bestimmen eines Kollisionszeitpunkts (514), zu dem sich die Fahrzeugtrajektorie (420) und die mögliche Objekttrajektorie (422) schneiden, wobei der Kollisionszeitpunkt (514) einen Zeitpunkt umfasst, zu dem die Kollision auftreten wird, wenn das Fahrzeug (102₁, 200) der Fahrzeugtrajektorie folgt und das Objekt (102₂, 104, 106) der Objekttrajektorie folgt; Vergleichen der Kollisionszeit (514) mit einem Schwellenzeitwert (516); und Bestimmen, ob die Kollision vermieden werden kann, wenn das Fahrzeug (102₁, 200) der Fahrzeugtrajektorie (420) folgt und ein beliebiges einer Vielzahl von dynamisch erzeugten Notfallmanövern in einem vordefinierten Zeitraum durchgeführt wird, wenn die Kollisionszeit (514) gleich oder kleiner als der Schwellenzeitwert (516) ist.

2. Verfahren (500) nach Anspruch 1, wobei mindestens eine von der ersten und der zweiten möglichen Objekttrajektorie Folgendes umfasst:
eine Trajektorie, die durch die tatsächliche Geschwindigkeit und die tatsächliche Fahrtrichtung des Objekts (102₂, 104, 106) definiert ist,
eine Trajektorie, die durch die tatsächliche Geschwindigkeit des Objekts (102₂, 104, 106) und eine andere mögliche Fahrtrichtung des Objekts (102₂, 104, 106) definiert ist,
eine Trajektorie, die durch eine andere mögliche Geschwindigkeit des Objekts (102₂, 104, 106) und die tatsächliche Fahrtrichtung des Objekts (102₂, 104, 106) definiert ist, oder
eine Trajektorie, die durch die andere mögliche Geschwindigkeit des Objekts (102₂, 104, 106) und die andere mögliche Fahrtrichtung des Objekts (102₂, 104, 106) definiert ist.

3. Verfahren (500) nach Anspruch 2, ferner umfassend das Klassifizieren des Objekts (102₂, 104, 106) in eine Klasse einer Vielzahl von vordefinierten Klassen.

4. Verfahren (500) nach Anspruch 3, wobei die andere mögliche Geschwindigkeit des Objekts (102₂, 104, 106) und die andere mögliche Fahrtrichtung des Objekts (102₂, 104, 106) für die Klasse, in die das Objekt (102₂, 104, 106) klassifiziert wurde, vorgegeben sind.

5. Verfahren nach einem der vorhergehenden Ansprüche, wobei eine Schwellenwahrscheinlichkeit, dass eine Kollision auftritt, erfüllt ist, wenn sich die Fahrzeugtrajektorie (420) und die ausgewählte mögliche Objekttrajektorie (422) schneiden.

6. Verfahren nach Anspruch 1, wobei das Fahrzeug (102₁, 200) selektiv veranlasst wird, das Notfallmanöver durchzuführen, wenn bestimmt wird, dass die Kollision in dem vordefinierten Zeitraum nicht vermieden werden kann.

7. Verfahren nach Anspruch 1, wobei die Vielzahl von dynamisch erzeugten Notfallmanövern Folgendes umfasst:
ein Notfallmanöver, das einen Bremsbefehl beinhaltet und basierend auf der Fahrzeugtrajektorie (420) und der ausgewählten möglichen Objekttrajektorie (422) bestimmt wird,
ein Notfallmanöver, das mindestens einen Lenkbefehl und einen Bremsbefehl oder einen Beschleunigungsbefehl beinhaltet und das über einen Gradientenabstieg von einer aktiven Fahrzeugtrajektorie (420) auf einer Zielfunktion bestimmt wird, die Kollisionen und Fahrkomfortbeeinträchtigungen bestraft, Folgendes umfassend:
• Parametrieren sowohl von Lenken als auch Bremsen/Beschleunigen mit einer begrenzten Anzahl von Spline-Punkten;
• Minimieren der Zielfunktion, die Kollisionen und Fahrkomfortbeeinträchtigungen bestraft, in Abhängigkeit von diesen Parametern unter Verwendung von konjugiertem Gradientenabstieg, Newton-Verfahren, Powell-Verfahren oder einem anderen Verfahren zur Minimierung multivariater Funktionen; und
• Berechnen der entsprechenden Trajektorie aus den parametrisierten Spline-Punkten mit den minimalen Zielfunktionskosten
und
ein vordefiniertes Notfallmanöver, das über einen Gradientenabstieg von der aktiven Fahrzeugtrajektorie (420) auf die Zielfunktion optimiert wurde, die Kollisionen und Fahrkomfortbeeinträchtigungen bestraft.

8. Verfahren nach einem der vorhergehenden Ansprüche, wobei das Notfallmanöver ein Beschleunigungs- und Abbiegemanöver umfasst, um eine Kollision zu vermeiden.

9. System, Folgendes umfassend:
einen Prozessor;
ein nichtflüchtiges computerlesbares Speichermedium, das Programmieranweisungen umfasst, die konfiguriert sind, um den Prozessor zu veranlassen, ein Verfahren (500) zum Betreiben eines Fahrzeugs (102₁, 200) zu implementieren, wobei die Programmieranweisungen Anweisungen zu Folgendem umfassen:
Erzeugen einer Fahrzeugtrajektorie (420) für das in Bewegung befindliche Fahrzeug (102₁, 200);
Erfassen eines Objekts (102₂, 104, 106) innerhalb einer vorgegebenen Entfernung von dem Fahrzeug (102₁, 200);
Erzeugen einer ersten und einer zweiten möglichen Objekttrajektorie (422) des erfassten Objekts (102₂, 104, 106);
Auswählen, durch die Rechenvorrichtung (220, 300), einer möglichen Objekttrajektorie (422) aus der ersten und der zweiten möglichen Objekttrajektorie, die ein Worst-Case-Kollisionsszenario für das Fahrzeug und das erfasste Objekt (102₂, 104, 106) bereitstellt;
Durchführen einer Kollisionsprüfung (414), um zu bestimmen, dass noch Zeit verbleibt, um sicher auf das Worst-Case-Verhalten des Objekts (102₂, 104, 106) zu reagieren, wobei die Kollisionsprüfung (414) auf der Fahrzeugtrajektorie (420) und der ausgewählten möglichen Objekttrajektorie (422) basiert; und
selektives Veranlassen des Fahrzeugs (102₁, 200), ein Notfallmanöver basierend auf Ergebnissen der Kollisionsprüfung (414) durchzuführen, wobei die Kollisionsprüfung (414) Folgendes umfasst: Bestimmen, ob sich die Fahrzeugtrajektorie (420) und die mögliche Objekttrajektorie (422) schneiden; Bestimmen eines Kollisionszeitpunkts (514), zu dem sich die Fahrzeugtrajektorie (420) und die mögliche Objekttrajektorie (422) schneiden, wobei der Kollisionszeitpunkt (514) einen Zeitpunkt umfasst, zu dem die Kollision auftreten wird, wenn das Fahrzeug (102₁, 200) der Fahrzeugtrajektorie folgt und das Objekt (102₁, 104, 106) der Objekttrajektorie folgt; Vergleichen der Kollisionszeit (514) mit einem Schwellenzeitwert (516); und Bestimmen, ob die Kollision vermieden werden kann, wenn das Fahrzeug (102₁, 200) der Fahrzeugtrajektorie (420) folgt und ein beliebiges einer Vielzahl von dynamisch erzeugten Notfallmanövern in einem vordefinierten Zeitraum durchgeführt wird, wenn die Kollisionszeit (514) gleich oder kleiner als der Schwellenzeitwert (516) ist;
wobei das System dazu ausgelegt ist, ein Verfahren (500) nach einem der vorhergehenden Ansprüche durchzuführen.

## Revendications

1. Procédé (500) pour faire fonctionner un véhicule (102₁, 200), comprenant :
la génération, par un dispositif informatique (220, 300), d'une trajectoire de véhicule (420) pour un véhicule (102₁, 200) qui est en mouvement ;
la détection d'un objet (102₂, 104, 106) dans les limites d'une distance donnée du véhicule (102₁, 200) ;
la génération, par le dispositif informatique (220, 300), de première et deuxième trajectoires d'objet possibles pour l'objet (102₂, 104, 106) qui a été détecté ;
la sélection, par le dispositif informatique (220, 300), d'une trajectoire d'objet possible (422) parmi les première et deuxième trajectoires d'objet possibles, qui fournit un scénario de collision le plus défavorable pour le véhicule (102₁, 200) et l'objet (102₂, 104, 106) qui a été détecté ;
la réalisation, par le dispositif informatique (220, 300), d'un contrôle de collision (414) afin de déterminer s'il reste suffisamment de temps pour réagir en toute sécurité au comportement le plus défavorable de l'objet (102₂, 104, 106), le contrôle de collision (414) étant basé sur la trajectoire de véhicule (420) et la trajectoire d'objet possible sélectionnée (422) ; et
la réalisation d'opérations, par le dispositif informatique (220, 300), pour amener de manière sélective le véhicule (102₁, 200) à réaliser une manoeuvre d'urgence sur la base de résultats du contrôle de collision (414), **caractérisé en ce que**
le contrôle de collision (414) comprend : la détermination de si la trajectoire de véhicule (420) et la trajectoire d'objet possible (422) se croisent ; la détermination d'un moment de collision (514) lorsque la trajectoire de véhicule (420) et la trajectoire d'objet possible (422) se croisent, le moment de collision (514) comprenant un moment auquel la collision se produira si la trajectoire de véhicule est suivie par le véhicule (102₁, 200) et la trajectoire d'objet est suivie par l'objet (102₂, 104, 106) ; la comparaison du moment de collision (514) à une valeur de temps seuil (516) ; et la détermination de si la collision peut être évitée si la trajectoire de véhicule (420) est suivie par le véhicule (102₁, 200) et si l'une quelconque d'une pluralité de manoeuvres d'urgence générées dynamiquement est réalisée dans un laps de temps prédéfini, lorsque le moment de collision (514) est égal ou inférieur à la valeur de temps seuil (516).

2. Procédé (500) selon la revendication 1, dans lequel au moins l'une des première et deuxième trajectoires d'objet possibles comprend
une trajectoire définie par la vitesse réelle et la direction de déplacement réelle de l'objet (102₂, 104, 106),
une trajectoire définie par la vitesse réelle de l'objet (102₂, 104, 106) et une autre direction de déplacement possible pour l'objet (102₂, 104, 106),
une trajectoire définie par une autre vitesse possible pour l'objet (102₂, 104, 106) et la direction de déplacement réelle de l'objet (102₂, 104, 106), ou
une trajectoire définie par l'autre vitesse possible pour l'objet (102₂, 104, 106) et l'autre direction de déplacement possible pour l'objet (102₂, 104, 106).

3. Procédé (500) selon la revendication 2, comprenant en outre le classement de l'objet (102₂, 104, 106) dans une classe parmi une pluralité de classes prédéfinies.

4. Procédé (500) selon la revendication 3, dans lequel l'autre vitesse possible pour l'objet (102₂, 104, 106) et l'autre direction de déplacement possible pour l'objet (102₂, 104, 106) sont prédéfinies pour la classe dans laquelle l'objet (102₂, 104, 106) a été classé.

5. Procédé selon l'une quelconque des revendications précédentes, dans lequel un seuil de probabilité qu'une collision se produise est atteint lorsque la trajectoire de véhicule (420) et la trajectoire d'objet possible sélectionnée (422) se croisent.

6. Procédé selon la revendication 1, dans lequel le véhicule (102₁, 200) est amené de manière sélective à réaliser la manœuvre d'urgence lorsqu'il est déterminé que la collision ne peut être évitée dans le laps de temps prédéfini.

7. Procédé selon la revendication 1, dans lequel la pluralité de manœuvres d'urgence générées dynamiquement comprend
une manœuvre d'urgence qui inclut une commande de freinage et est déterminée sur la base de la trajectoire de véhicule (420) et de la trajectoire d'objet possible sélectionnée (422),
une manœuvre d'urgence qui inclut au moins une commande de direction et une commande de freinage ou une commande d'accélération, et qui est déterminée via une descente de gradient à partir d'une trajectoire de véhicule active (420) sur une fonction objectif qui pénalise la collision et l'inconfort de conduite, comprenant :
• la paramétrisation à la fois de la direction et du freinage/de l'accélération avec un ensemble limité de points de spline ;
• la minimisation de la fonction objectif qui pénalise la collision et l'inconfort de conduite, en fonction de ces paramètres, en utilisant la descente de gradient conjugué, la méthode de Newton, la méthode de Powell ou une autre méthode pour minimiser les fonctions multivariées ; et
• le calcul de la trajectoire correspondant aux points de spline paramétrés avec le coût minimal de la fonction objectif,
et
une manœuvre d'urgence prédéfinie qui a été optimisée via une descente de gradient à partir de la trajectoire de véhicule active (420) sur la fonction objectif qui pénalise la collision et l'inconfort de conduite.

8. Procédé selon l'une quelconque des revendications précédentes, dans lequel la manœuvre d'urgence comprend une manœuvre d'accélération et de déviation pour éviter une collision.

9. Système comprenant :
un processeur ;
un support de stockage non transitoire lisible par ordinateur comprenant des instructions de programmation qui sont configurées pour amener le processeur à mettre en œuvre un procédé (500) pour faire fonctionner un véhicule (102₁, 200), dans lequel les instructions de programmation comprennent des instructions pour :
générer une trajectoire de véhicule (420) pour le véhicule (102₁, 200) qui est en mouvement ;
détecter un objet (102₂, 104, 106) dans les limites d'une distance donnée du véhicule (102₁, 200) ;
générer des première et deuxième trajectoires d'objet possibles (422) pour l'objet (102₂, 104, 106) qui a été détecté ;
sélectionner, par le dispositif informatique (220, 300), une trajectoire d'objet possible (422) parmi les première et deuxième trajectoires d'objet possibles qui fournit un scénario de collision le plus défavorable pour le véhicule et l'objet (102₂, 104, 106) qui a été détecté ;
réaliser un contrôle de collision (414) pour déterminer s'il reste suffisamment de temps pour réagir en toute sécurité au comportement le plus défavorable de l'objet (102₂, 104, 106), le contrôle de collision (414) étant basé sur la trajectoire de véhicule (420) et la trajectoire d'objet possible sélectionnée (422) ; et
amener de manière sélective le véhicule (102₁, 200) à réaliser une manœuvre d'urgence sur la base de résultats du contrôle de collision (414), dans lequel le contrôle de collision (414) comprend : la détermination de si la trajectoire de véhicule (420) et la trajectoire d'objet possible (422) se croisent ; la détermination d'un moment de collision (514) lorsque la trajectoire de véhicule (420) et la trajectoire d'objet possible (422) se croisent, le moment de collision (514) comprenant un moment auquel la collision se produira si la trajectoire de véhicule est suivie par le véhicule (102₁, 200) et la trajectoire d'objet est suivie par l'objet (102₂, 104, 106) ; la comparaison du moment de collision (514) à une valeur de temps seuil (516) ; et la détermination de si la collision peut être évitée si la trajectoire de véhicule (420) est suivie par le véhicule (102₁, 200) et si l'une quelconque d'une pluralité de manœuvres d'urgence générées dynamiquement est réalisée dans un laps de temps prédéfini, lorsque le moment de collision (514) est égal ou inférieur à la valeur de temps seuil (516) ;
dans lequel le système est adapté pour réaliser un procédé (500) selon l'une quelconque des revendications précédentes.
